# FASCICULE DE BREVET EUROPEEN

(11) **EP 0 755 197 B1**
(45) Date de publication et mention de la délivrance du brevet: **27.01.1999**
(21) Numéro de dépôt: 95917393.1
(22) Date de dépôt: 13.04.1995
(51) Int. Cl.: A23L 1/187

(54) **BASE POUR PREPARATION A FROID D'UN ENTREMET DU TYPE FLAN**
GRUNDSTOFF ZUR HERSTELLUNG EINES KALTDESSERTPRODUKTES DES TYPS EIERCREME
BASE FOR PREPARATION OF A FLAN-TYPE DESSERT WITHOUT HEATING

(30) Priorité: 14.04.1994 FR 9404443
(43) Date de publication de la demande: 29.01.1997
(73) Titulaire: CPC INTERNATIONAL INC., Englewood Cliffs New Jersey 07632-9976 (US)
(72) Inventeur: LEFLECHER, René, 78000 Versailles (FR); CACHAN, Guy, 54000 Nancy (FR); KUHN, Klaus, 74074 Heilbronn (DE)
(74) Mandataire: Bloch, Gérard
(86) Numéro de dépôt international: FR9500484
(87) Numéro de publication internationale: WO9528093

(56) Documents cités:
- EP-A- 0 504 632
- EP-A- 0 517 423
- GB-A- 2 261 805
- US-A- 4 192 900

## Description

Pour préparer un entremets du genre d'un flan, autrefois, on faisait bouillir du lait, on ajoutait un mélange de sucre, d'épaississant, de gélifiant, d'arôme et de colorant, on remuait quelques minutes, on moulait la préparation ainsi obtenue, on laissait refroidir jusqu'au début de la prise en gel et on refroidissait au réfrigérateur. Le refroidissement naturel jusqu'au début de la gélification durait environ deux heures, le refroidissement forcé en réfrigérateur, environ une heure. L'entremets pouvait donc être consommé environ trois heures après le début de sa préparation.

Comme épaississant, on utilisait de l'amidon, ou un produit équivalent, qui, par hydratation, augmente de volume et provoque donc une viscosité du milieu.

Comme gélifiant, on utilisait des carraghénanes, qui sont des extraits d'algues, et qui, par solubilisation à chaud, provoquent un phénomène semblable à une cristallisation et conféraient à la préparation sa structure cassante.

Comme arôme, l'arôme vanille ou le cacao conviennent bien.

Pour s'affranchir de la nécessité de faire bouillir le lait et réduire le temps de préparation, on a déjà proposé de substituer aux carraghénanes des alginates de sodium, solubles à température ambiante, la gélification s'effectuant par substitution du calcium du lait au sodium. Pour réguler la gélification, éviter que la substitution ne soit trop rapide et qu'elle n'intervienne avant l'action de l'épaississant et donc pour éviter qu'il ne se forme des grumeaux, on a aussi proposé d'ajouter des séquestrants, des sels chélatants, comme des sels de phosphate, qui retardent cette substitution. Ces séquestrants ont une grande affinité pour le calcium qu'ils absorbent avant de le libérer progressivement.

Ce procédé de préparation d'entremets à froid, à base d'alginate de sodium et de séquestrants, n'est toutefois pas encore pleinement satisfaisant. La qualité gustative des séquestrants est très médiocre et si le lait est à trop basse température, celle d'un réfrigérateur, la réaction de gélification peut ne pas s'effectuer correctement.

La présente invention vise à pallier ces inconvénients.

A cet effet, l'invention concerne un entremets du type flan utilisant, pour sa préparation à froid, une base comprenant du sucre, un épaississant, de l'alginate de sodium, un séquestrant et un arôme, caractérisé par le fait que l'alginate de sodium est broyé.

Grâce au broyage de l'alginate, sa solubilité est notablement augmentée et l'entremets peut être préparé même avec du lait sortant du réfrigérateur, à une température comprise entre environ 2 et 7°C. En outre, la gélification est plus rapide et la durée de préparation est réduite à environ une heure.

Dans la forme de réalisation préférée de l'entremets de l'invention, le séquestrant est également broyé.

Grâce au broyage du séquestrant, son pouvoir de séquestration est amélioré et il peut donc être utilisé en quantité moindre, ce qui améliore d'autant la qualité gustative de la préparation obtenue avec la base de l'entremets de l'invention.

Avantageusement, l'alginate de sodium et le séquestrant de la base ont été broyés ensemble, pour les mêler intimement l'un à l'autre.

De préférence, l'alginate et le séquestrant de la base sont broyés en particules de granulométrie moyenne ne dépassant pas sensiblement 100 µm.

Ainsi, avec la base de l'entremets de l'invention, il suffit de sortir du lait du réfrigérateur, d'y ajouter la dose appropriée de la base, de mélanger, de mouler et d'attendre la fin de la gélification, environ une heure, pour démouler et consommer l'entremets.

Comme entremets pouvant être ainsi préparés, outre les flans, on peut citer les gâteaux de riz, les gâteaux de semoule, les crèmes caramel et autres desserts à préparer avec du lait froid.

Bien entendu, la base de l'entremets de l'invention peut également contenir un colorant et un antimoussant, ce dernier, pour l'obtention d'un aspect lisse en surface de l'entremets.

Avantageusement encore, le sucre de la base de l'entremets de l'invention est aussi broyé.

Dans le cas où la base de l'entremets de l'invention contient du cacao comme arôme, il y est de préférence présent sous forme de granulés solubles à froid obtenus par agglomération sur granuleur de poudre de cacao et de sucre.

La base de l'entremets de l'invention peut contenir, en poids, environ de 0,1 à 1 %, de préférence environ 0,3 %, d'alginate de sodium, environ de 0,1 à 1 %, de préférence environ 0,2 %, de phosphate de potassium, environ 0,05 % d'arôme vanille ou environ 50 à 60 % d'un mélange de sucre et de cacao aggloméré.

### Expériences

Avec une base non broyée, on obtient, au bout d'une heure, une préparation présentant des points blancs visibles tant en surface que dans la masse et de pénétrabilité de 27 g.

Les points blancs traduisent un défaut de solubilité. Quant à la pénétrabilité, ou force de pénétration exprimée en g, qui traduit la fermeté du gel obtenu, elle a été mesurée à l'aide d'un pénétromètre pourvu d'un plongeur de 2,54 cm de diamètre, animé d'une vitesse de 1 mm.s⁻¹ et pénétrant le gel sur une profondeur de 4 mm.

Avec la même base de départ, mais préalablement soumise à un broyage au marteau à travers un tamis à mailles de 1 mm, et toujours au bout d'une heure, des points blancs sont encore visibles en surface et dans la masse mais la pénétrabilité passe à 29,2 g.

Avec encore la même base de départ, et un broyage à travers un tamis à mailles de 0,5 mm, la pénétrabilité atteint 34 g et les points blancs disparaissent complètement. Avec un tamis à mailles de 0,2 mm, la pénétrabilité est encore augmentée, à 34,5 g, avec toujours, naturellement, absence de points blancs visibles.

Plus la base est broyée, plus sa gélification est rapide et moins elle présente de points blancs en surface et dans la masse.

## Revendications

1. Entremets du type flan utilisant, pour sa préparation à froid, une base comprenant du sucre, un épaississant, de l'alginate de sodium, un séquestrant et un arôme,
caractérisé par le fait que l'alginate de sodium de la base est broyé.

2. Entremets selon la revendication 1, dans lequel le séquestrant de la base est broyé.

3. Entremets selon la revendication 2, dans lequel l'alginate de sodium et le séquestrant de la base ont été broyés ensemble.

4. Entremets selon l'une des revendications 1 à 3, dans lequel le sucre de la base est broyé.

5. Entremets selon l'une des revendications 1 à 4, dans lequel la granulométrie moyenne des particules de broyage de la base ne dépasse pas 100 µm.

6. Entremets selon l'une des revendications 1 à 5, dans lequel la base contient 0,1 à 1 %, de préférence 0,3 %, en poids d'alginate de sodium.

7. Entremets selon l'une des revendications 1 à 6, dans lequel la base contient 0,1 à 1 %, de préférence 0,2 %, en poids de sel de phosphate.

8. Entremets selon l'une des revendications 1 à 7, dans lequel la base contient en outre 0,05 % d'arôme vanille.

9. Entremets selon l'une des revendications 1 à 7, dans lequel la base contient en outre des granulés de poudre de cacao et de sucre.

10. Entremets selon la revendication 9, dans lequel la proportion en poids des granulés de poudre de cacao et de sucre de la base est de 50 à 60 %.

## Claims

1. Flan type dessert using, for its preparation in the cold state, a base comprising sugar, a thickener, sodium alginate, a sequestering agent and a flavouring agent, characterised in that the sodium alginate of the base is ground.

2. Dessert according to claim 1, wherein the sequestering agent of the base is ground.

3. Dessert according to claim 2, wherein the sodium alginate and the sequestering agent of the base are ground together.

4. Dessert according to one of clams 1 to 3, wherein the sugar of the base is ground.

5. Dessert according to one of claims 1 to 4, wherein the average particle size of the ground particles of the base does not exceed 100µm.

6. Dessert according to one of claims 1 to 5, wherein the base contains 0.1 to 1%, preferably 0.3% by weight of sodium alginate.

7. Dessert according to one of claims 1 to 6, wherein the base contains 0.1 to 1%, preferably 0.2% by weight of phosphate salt.

8. Dessert according to one of claims 1 to 7, wherein the base further contains 0.05% of vanilla flavouring.

9. Dessert according to one of claims 1 to 7, wherein the base further contains granules of cocoa powder and of sugar.

10. Dessert according to claim 9, wherein the proportion by weight of the granules of cocoa powder and of sugar of the base is 50 to 60%.

## Patentansprüche

1. Süßspeise vom Typ Pudding, für deren Kaltzubereitung eine Grundmasse mit Zucker, einem Verdickungsmittel, Natriumalginat, einem Chelatringsmittel sowie einem Aroma verwendet werden,
dadurch gekennzeichnet, daß das Natriumalginat der Grundmasse zerkleinert ist.

2. Süßspeise nach Anspruch 1, bei der das Chelatringsmittel der Grundmasse zerkleinert ist.

3. Süßspeise nach Anspruch 2, bei der das Natriumalginat und das Chelatringsmittel der Grundmasse gemeinsam zerkleinert wurden.

4. Süßspeise nach einem der Ansprüche 1 bis 3, bei der der Zukker der Grundmasse zerkleinert ist.

5. Süßspeise nach einem der Ansprüche 1 bis 4, bei der die mittlere Granulometrie der Zerkleinerungsteilchen der Grundmasse 100 µm nicht überschreitet.

6. Süßspeise nach einem der Ansprüche 1 bis 5, bei der die Grundmasse 0,1 bis 1 Gew.-%, bevorzugt 0,3 % Gew.-% Natriumalginat enthält.

7. Süßspeise nach einem der Ansprüche 1 bis 6, bei der die Grundmasse 0,1 bis 1 Gew.-%, bevorzugt 0,2 % Gew.-% Phosphatsalz enthält.

8. Süßspeise nach einem der Ansprüche 1 bis 7, bei der die Grundmasse ferner 0,05 % Vanillearoma enthält.

9. Süßspeise nach einem der Ansprüche 1 bis 7, bei der die Grundmasse ferner ein Granulat aus Kakaopulver und Zucker enthält.

10. Süßspeise nach Anspruch 9, bei der das Gewichtsverhältnis des Granulats aus Kakaopulver und Zucker der Grundmasse 50 bis 60 % ist.
